# EUROPÄISCHE PATENTSCHRIFT

(11) **EP 3 094 212 B1**
(45) Veröffentlichungstag und Bekanntmachung des Hinweises auf die Patenterteilung: **27.06.2018**
(21) Anmeldenummer: 14802375.7
(22) Anmeldetag: 14.11.2014
(51) Int. Cl.: A47C 1/027, A47C 17/12

(54) **SCHWENKGELENK UND MÖBELSTÜCK MIT EINEM SOLCHEN**
PIVOT JOINT AND ITEM OF FURNITURE HAVING SAME
ARTICULATION À PIVOT ET MEUBLE ÉQUIPÉ D'UNE TELLE ARTICULATION À PIVOT

(30) Priorität: 14.01.2014 DE 102014200550
(43) Veröffentlichungstag der Anmeldung: 23.11.2016
(73) Patentinhaber: Kintec-Solution GmbH, 33397 Rietberg (DE)
(72) Erfinder: KISKEMPER, Lars-Philipp, 33803 Steinhagen (DE); BESLER, Boris, 33330 Gütersloh (DE)
(74) Vertreter: Kraus & Weisert Patentanwälte PartGmbB
(86) Internationale Anmeldenummer: PCT/EP2014/074668
(87) Internationale Veröffentlichungsnummer: WO 2015/106852

(56) Entgegenhaltungen:
- DE-C1- 19 801 358
- DE-U1- 20 112 976
- DE-U1-202007 006 758

## Beschreibung

Die Erfindung betrifft ein arretierbares Schwenkgelenk, insbesondere für ein Möbelstück, mit einem ersten Gelenkabschnitt und einem zweiten Gelenkabschnitt, mit einem Drehlager mittels dessen der erste Gelenkabschnitt und der zweite Gelenkabschnitt um eine Hauptachse gegeneinander drehbar sind, und mit einem Arretiermechanismus am ersten Gelenkabschnitt, der zwischen einem Freigabezustand und einem Arretierzustand schaltbar und dadurch der zweite Gelenkabschnitt gegenüber dem ersten Gelenkabschnitt in mindestens einer Relativdrehstellung arretierbar ist.

Ein gattungsgemäßes Schwenkgelenk ist beispielsweise aus der DE 198 01 358 C1 bekannt. Das dort beschriebene Gelenk verfügt über ein Drehlager mit einem an einem drehbaren Stützrahmen angebrachten Rastbolzen, der in zwei unterschiedlichen Stellungen in Axialrichtung in eine Rastbohrung einrücken kann, um den arretierten Zustand herzustellen. Die Axialbewegung des Rastbolzens wird über einen umlenkenden Hebelarm und eine darauf wirkende Betätigungsstange mit Betätigungselement bewirkt.

Die in der DE 198 01 358 C1 beschriebene Gestaltung ist in hohem Maße auf ihren konkreten Anwendungszweck zugeschnitten und gestattet keine einfache Übernahme in anders geartete Möbelstücke. Die fallweise Anpassung eines gattungsgemäßen Schwenkgelenks an unterschiedliche Anwendungszwecke ist vergleichsweise teuer.

Ein weiteres Schwenkgelenk ist aus der DE20112976U1 bekannt.

### AUFGABE UND LÖSUNG

Aufgabe der Erfindung ist es, ein Schwenkgelenk zur Verfügung zu stellen, welches eine breite Anwendbarkeit bei geringen Kosten und bei hoher Stabilität bietet. Die Erfindung wird durch die Merkmale des Anspruchs 1 definiert. Gemäß einem ersten Aspekt der Erfindung wird dies erfindungsgemäß dadurch erreicht, dass der erste Gelenkabschnitt eine obere und eine untere Gehäuseplatte aufweist und dass weiterhin der Arretiermechanismus wenigstens einen schwenkbeweglichen Klemmhebel aufweist, der zwischen den Gehäuseplatten angeordnet ist und durch ein Achselement gelagert ist, welches an der oberen und/oder an der unteren Gehäuseplatte befestigt ist.

Die beiden Gelenkabschnitte eines erfindungsgemäßen Schwenkgelenks sind jene Abschnitte, die bestimmungsgemäß mit zwei gegeneinander schwenkbeweglich zu verbindenden Abschnitten insbesondere eines Möbelstücks verbunden werden und gegeneinander um die Hauptachse drehbar sind. Zu diesem Zweck verfügen sie vorzugsweise über Befestigungsbohrungen oder dergleichen.

Der erste Gelenkabschnitt ist jener, der den schaltbaren Arretiermechanismus zum Festlegen des zweiten Gelenkabschnitts in einer oder mehrerer definierten Relativlage aufweist. Dieser Arretiermechanismus verfügt über wenigstens einen Klemmhebel, der beweglich ist, um in einer Arretierstellung die Relativbeweglichkeit des zweiten Gehäuseabschnitts zu unterbinden.

Ein besonders kompakter und stabiler Aufbau lässt sich dadurch erzielen, dass der erste Gelenkabschnitt zwei Gehäuseplatten aufweist, die gleichzeitig die Außenform des ersten Gelenkabschnitts definieren. Die Haupterstreckungsebene dieser Gehäuseplatten ist orthogonal zur Hauptachse ausgerichtet. Auch die Achse des mindestens einen schwenkbeweglichen Klemmhebels ist orthogonal zu den Gehäuseplatten angeordnet. Die Gehäuseplatten können dadurch neben ihrer Funktion, den Arretiermechanismus zu beherbergen und zu schützen, auch eine stabilisierende Führung für den Klemmhebel darstellen. Durch ein Achselement, beispielsweise in Art eines Achsniets, ist der Klemmhebel an einer der beiden Gehäuseplatten gelagert.

Die beiden Gehäuseplatten weisen vorzugsweise eine Plattenstärke zwischen 3 mm und 10 mm auf. Die durch ihre Außenkontur definierte Fläche beträgt vorzugsweise mindestens 60 cm², insbesondere vorzugsweise mindestens 100 cm². Innerhalb dieser Fläche können allerdings verschiedene Durchbrechungen vorgesehen sein, die nachfolgend noch beschrieben sind. Die Außenkontur der beiden Gehäuseplatten ist vorzugsweise identisch. Insbesondere eine kreisrunde Außenkontur wird als vorteilhaft angesehen. Diese vergleichsweise große Fläche der Gehäuseplatten erlaubt es, auftretende Biegemomente weit von der Hauptachse entfernt in das Schwenkgelenk einzuleiten und somit eine hohe Stabilität zu erzielen. Auch wird hierdurch eine große Auflagefläche der Gehäuseplatte an dem Möbelsegment erzielt, an dem der erste und/oder zweite Gehäuseabschnitt befestigt ist.

Zusätzlich kann eine Zwischenplatte vorgesehen sein, die an beiden Gehäuseplatten flächig anliegt und die über eine Durchbrechung verfügt, in der der Arretiermechanismus und insbesondere der schwenkbewegliche Klemmhebel angeordnet ist. Die Zwischenplatte weist ebenso wie die Gehäuseplatten vorzugsweise eine Stärke zwischen 3 mm und 10 mm auf.

Der erste Gehäuseabschnitt eines erfindungsgemäßen Schwenkgelenks ist demnach vorzugsweise in einer Art Sandwich-Struktur aufgebaut, die idealerweise über drei aufeinanderliegende Platten verfügt, welche aufgrund ihres Flächenkontaktes eine sehr stabile Einheit bilden. Untereinander sind die Platten vorzugsweise mit einer Nietverbindung verbunden. Der Verbund der Platten kann sehr flach gebaut sein und weist vorzugsweise bezogen auf die Platten eine Gesamtstärke von weniger als 20 mm auf. Dies gestattet eine Vielzahl von Verwendungszwecken auch bei begrenztem Bauraum.

Die Platten sind vorzugsweise durch Stanzen hergestellt, wobei sich dies insbesondere auf die Außenkontur bezieht. Vorzugsweise sind jedoch auch Nietlöcher sowie zentrische Aussparungen zur Durchführung einer Schwenkachse des zweiten Gelenkabschnitts und/oder einer Aussparung in einer der Gehäuseplatten, durch die sich ein Haltefortsatz des zweiten Gelenkabschnitts erstreckt, durch Stanzen in die jeweilige Gehäuseplatte eingebracht.

Der genannte Haltefortsatz, der am zweiten Gelenkabschnitt vorgesehen ist und sich bis in den Bereich des Arretiermechanismus des ersten Gelenkabschnitts erstreckt, wird bestimmungsgemäß vorzugsweise im arretierten Zustand gegen eine Anschlagfläche am ersten Gelenkabschnitt gepresst. Diese Anschlagfläche kann an einer der Gehäuseplatten oder der genannten Zwischenplatte vorgesehen sein. Von besonderem Vorteil ist es, wenn die Anschlagfläche durch die Zwischenplatte und die zum zweiten Gelenkabschnitt hinweisende obere Gehäuseplatte des ersten Gelenkabschnitts gemeinsam gebildet wird. Nicht Teil der Erfindung ist ein gattungsgemäßes Schwenkgelenk, welches vorzugsweise ebenfalls mit den genannten zwei Gehäuseplatten ausgestaltet ist, weiterhin derart ausgestaltet, dass der Arretiermechanismus die folgenden Komponenten aufweist: zum ersten verfügt der Arretiermechanismus über einen Klemmhebel, der zwischen der Arretierstellung und der Freigabestellung verschwenkbar ist. Weiterhin verfügt der Arretiermechanismus über ein Federelement, durch das der Klemmhebel in Richtung seiner Arretierstellung kraftbeaufschlagt wird. Zum Zwecke der Bewegung des Klemmelements verfügt das Schwenkgelenk gemäß diesem Aspekt über einen Schaltseilzug, mittels dessen der Klemmhebel gegen die Kraft des Federelements in die Freigabestellung verschwenkbar ist.

Bei einer Gestaltung mit den genannten zwei Gehäuseplatten erstreckt sich der Seilzug bis in einen Zwischenbereich zwischen diesen Gehäuseplatten, wo er mit dem Klemmhebel derart gekoppelt ist, dass durch Zug auf den Seilzug der Klemmhebel gegen die Kraft des Federelements in Richtung seiner Freigabestellung verlagert werden kann. Besonders von Vorteil ist es, wenn in einer der Gehäuseplatten eine Durchbrechung vorgesehen ist, durch die hindurch der Seilzug in den Zwischenbereich zwischen den Gehäuseplatten geführt ist. Die Verwendung eines Schaltseilzugs, der unmittelbar mit dem im Gehäuse befindlichen Arretiermechanismus gekoppelt ist, führt zu einer sehr flexiblen Verwendbarkeit des Schwenkgelenks. Der vorzugsweise außerhalb des Schwenkgelenks in einer schlauchartigen Führung geführte Schaltseilzug kann somit zu einer Betätigungshandhabe zum Arretieren und Lösen des Schwenkgelenks geführt sein, welche recht frei an dem mit dem Schwenkgelenk versehenen Möbelstücks positionierbar ist.

Eine besonders einfache Gestaltung ergibt sich, wenn der Seilzug unmittelbar am schwenkbeweglichen Klemmhebel angreift, da so ein Minimum an Bauteilen ausreicht. Es hat sich allerdings gezeigt, dass es von besonderem Vorteil ist, wenn ein ebenfalls schwenkbarer Übertragungshebel vorgesehen ist, an welchem der Schaltseilzug unmittelbar angreift und der seinerseits über einen Kontaktbereich verfügt, mittels dessen der Klemmhebel momentenbeaufschlagbar ist. Hierdurch lässt sich eine fallweise vorteilhafte Kraftumlenkung realisieren. Nicht erfingdungsgemäß ist ein gattungsgemäßes Schwenkgelenk, welches vorzugsweise in oben beschriebener Art einen ersten Gelenkabschnitt mit einer unteren und einer oberen Gehäuseplatte und/oder einen Schaltseilzug aufweist, wie folgt ausgebildet. Er verfügt über eine Haltefläche am zweiten Gelenkabschnitt exzentrisch zur Hauptachse des Schwenkgelenks. Zum Zusammenwirken mit dieser Haltefläche verfügt der Arretiermechanismus über mindestens einen Klemmhebel, der um eine Klemmhebelachse zwischen einer Arretierstellung und einer Freigabestellung schwenkbeweglich am ersten Gelenkabschnitt angebracht ist. Dabei ist der Klemmhebel mit einer Klemmfläche ausgestattet, die zur arretierenden Anlage an der Haltefläche des zweiten Gelenkabschnitts vorgesehen ist, wobei diese Klemmfläche gegenüber einer Tangentialebene zur Klemmhebelachse geneigt ist.

Die Besonderheit dieser Gestaltung liegt in der Neigung der Klemmfläche. Diese ist derart geneigt, dass sie einen nicht einheitlichen Abstand zur Klemmhebelachse aufweist. Die Haltefläche, die vorzugsweise an einem Haltestift oder einem anderweitigen Haltefortsatz vorgesehen ist, der im arretierten Zustand des Schwenkgelenks an einer Anschlagfläche des ersten Gelenkabschnitts anliegt, muss aufgrund der geneigten Klemmfläche nicht in sehr präziser Weise am zweiten Gelenkabschnitt angeordnet sein. Die geneigte Klemmfläche führt dazu, dass der Klemmhebel beim Verschwenken in Richtung der Arretierstellung sich der Sollposition der Haltefläche im arretierten Zustand zunehmend annähert und schließlich im arretierten Zustand an ihr zum Anliegen kommt. Sollte die Haltefläche des zweiten Gelenkabschnitts aufgrund ungenauer Fertigung etwas gegenüber ihrer Sollposition relativ zum zweiten Gelenkabschnitt versetzt sein, so kann aufgrund der genannten veränderlichen Beabstandung der Klemmfläche zur Klemmhebelachse dennoch ein sicheres Arretieren stattfinden. Der verminderte Präzisionsbedarf senkt die Herstellungskosten.

Die Neigung der Klemmfläche gegenüber der Tangentialebene beträgt vorzugsweise weniger als 25°. Hierdurch ist gewährleistet, dass trotz der geneigten Klemmfläche eine Selbsthemmung stattfindet, die in der Arretierstellung des Klemmhebels verhindert, dass die Haltefläche des zweiten Gelenkabschnitts aus ihrer arretierten Position entweichen kann.

Grundsätzlich ist es möglich, die geneigte Klemmfläche eben auszugestalten. Von Vorteil ist es jedoch insbesondere für ein problemloses Lösen des arretierten Zustandes, wenn die Klemmfläche konvex gewölbt ist.

Ein erfindungsgemäßes Schwenkgelenk weist vorzugsweise ein Drehlager auf, welches über einen Achsabschnitt am zweiten Gelenkabschnitt verfügt, der sich insbesondere vorzugsweise durch Durchbrechungen in der oberen und unteren Gehäuseplatte des ersten Gelenkabschnitts erstreckt.

Der Achsabschnitt kann unmittelbar durch die Durchbrechungen in der oberen bzw. unteren Gehäuseplatte des ersten Gelenkabschnitts geführt sein. Von Vorteil ist es jedoch, wenn eine Radiallagerbuchse in den ersten Gelenkabschnitt eingesetzt ist, der sich insbesondere vorzugsweise durch Durchbrechungen in der oberen und der unteren Gehäuseplatte erstreckt und der seinerseits den genannten Achsabschnitt des zweiten Gelenkabschnitts aufnimmt. Statt eines solchen Gleitlagers ist grundsätzlich auf die Verwendung eines Radialwälzkörperlagers möglich. Bei der genannten Gestaltung mit zwei beabstandeten Gehäuseplatten sind diese gut geeignet, Biegemomente im Bereich des Radiallagers aufzunehmen.

Wie bereits erwähnt, wird die Arretierbarkeit dadurch erzielt, dass es einen Haltefortsatz mit einer Haltefläche gibt, der am zweiten Gelenkabschnitt befestigt ist und der sich insbesondere vorzugsweise durch eine Durchbrechung in einer der Gehäuseplatten des zweiten Gelenkabschnitts in diesen hinein erstreckt. Eine baulich sehr einfache Gestaltung ergibt sich, wenn der zweite Gelenkabschnitt über eine Grundplatte verfügt, die vorzugsweise übereinstimmende Außenkonturen mit den Gehäuseplatten des ersten Gelenkabschnitts aufweist und an der der genannte Achsabschnitt und/oder der Haltefortsatz befestigt sind. Diese können insbesondere durch eine Schweißverbindung, eine Stemmverbindung oder eine Pressverbindung mit der Grundplatte verbunden sein. Wenn das Schwenkgelenk in der genannten Art und Weise mit einem Klemmhebel mit geneigter Klemmfläche ausgestaltet ist, so ist die genaue Positionierung des Achsabschnitts und des Haltefortsatzes am zweiten Gelenkabschnitt von nachgeordneter Bedeutung, so dass eine sehr günstige Herstellung dieses zweiten Gelenkabschnitts möglich ist.

Besonders von Vorteil ist es weiterhin, wenn ein erfindungsgemäßes Schwenkgelenk zur Arretierung der Gelenkabschnitte in mindestens zwei unterschiedlichen Relativdrehstellungen ausgebildet ist und hierfür zwei Klemmhebel aufweist, die jeweils zwischen einer Arretierstellung und einer Freigabestellung um eine jeweils eigene Klemmhebelachse verschwenkbar am ersten Gelenkabschnitt angebracht sind.

Von Vorteil ist es dabei, wenn die Klemmhebel zur Überführung in die jeweilige Arretierungsstellung gegenläufig verschwenkt werden. Weiterhin ist es von Vorteil, wenn ein gemeinsamer Schaltseilzug vorgesehen ist, mittels dessen beide Klemmhebel gegen die Kraft eines Federelements in die Freigabestellung verschwenkbar sind. Zur Kostenreduzierung ist es weiterhin von Vorteil, wenn ein gemeinsames Federelement vorgesehen ist, dessen Federenden exzentrisch an den beiden Klemmhebeln angebracht sind, so dass die Klemmhebel jeweils in Richtung ihrer Arretierstellung durch ein gemeinsames Federelement kraftbeaufschlagt werden.

Die Erfindung betrifft weiterhin auch ein Möbelstück mit einem Schwenkgelenk der beschriebenen Art. Dabei kann es sich insbesondere um ein Sitzmöbelstück mit einer verschwenkbaren Armlehne handeln, bei der das Schwenkgelenk zwischen einer Basis und dieser Armlehne angebracht ist, um die gewünschte Verschwenkbarkeit der Armlehne zu erzielen. Ein bestimmungsgemäßer Anwendungszweck eines erfindungsgemäßen Schwenkgelenk ist die Verwendung für eine schwenkbare Armlehne, die um eine gegenüber der Vertikalrichtung zwischen 30° und 70° angestellte Hauptachse verschwenkbar ist, um wahlweise als Armlehne oder als Vergrößerung der Sitz- oder Liegefläche verwendet zu werden.

### KURZBESCHREIBUNG DER ZEICHNUNGEN

Weitere Aspekte und Vorteile der Erfindung ergeben sich aus den Ansprüchen sowie dem nachfolgend anhand von den Figuren erläuterten Ausführungsbeispiel. Die Figuren zeigen:
- Fig. 1: ein erfindungsgemäßes Schwenkgelenk in einer Seitendarstellung,
- Fig. 2: das Schwenkgelenk der Fig. 1 in einer Explosionsdarstellung,
- Fig. 3a bis 3d: ein Schwenkvorgang ausgehend von einem ersten arretierten Zustand und endend in einem zweiten arretierten Zustand,
- Fig. 4a und 4b: ein erstes erfindungsgemäßes Sitzmöbelstück mit einem Schwenkgelenk gemäß Figuren 1 bis 3 und
- Fig. 5a und 5b: ein zweites erfindungsgemäßes Sitzmöbelstück mit einem Schwenkgelenk gemäß Figuren 1 bis 3.

### DETAILLIERTE BESCHREIBUNG DES AUSFÜHRUNGSBEISPIELS

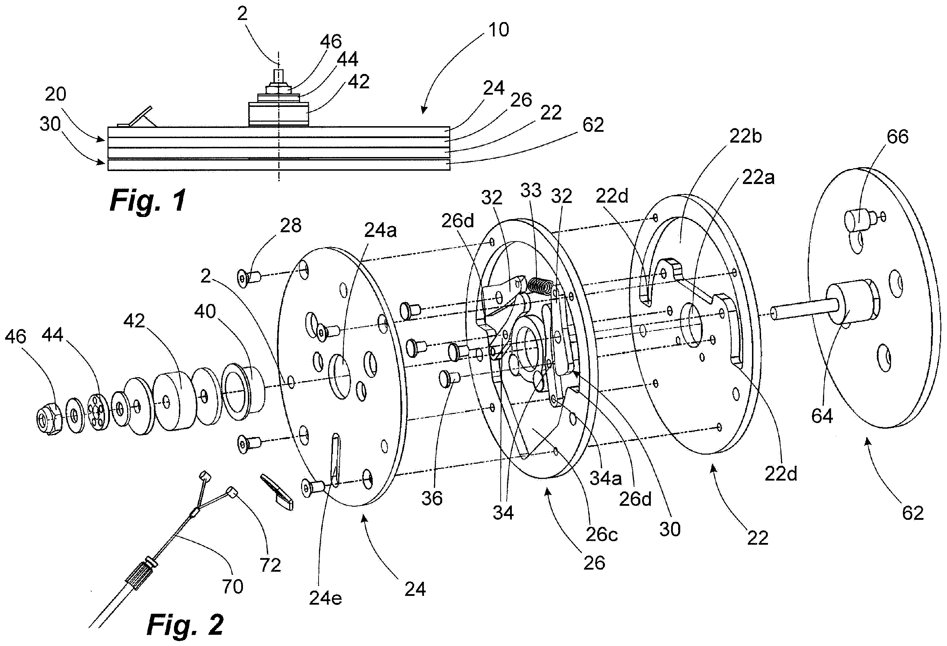

Fig. 1 zeigt ein erfindungsgemäßes Schwenkgelenk, welches als zwei Hauptkomponenten, einen ersten Gelenkabschnitt 20 sowie einen zweiten Gelenkabschnitt 60, aufweist. Die beiden Gelenkabschnitte 20, 60 sind in begrenztem Maße um eine Hauptachse 2 gegeneinander schwenkbeweglich. Vorliegend liegt die Schwenkbeweglichkeit bei 180°.

Der Aufbau im Einzelnen lässt sich der Explosionsdarstellung der Fig. 2 entnehmen. Aus dieser ist ersichtlich, dass der erste Gelenkabschnitt 20 über zwei den Gelenkabschnitt beidseitig abschließende Gehäuseplatten 22, 24 verfügt, zwischen denen eine Zwischenplatte 26 angeordnet ist. Neben verschiedenen kleineren Durchbrechungen zur Aufnahme von Nieten und zum Hindurchführen eines im Weiteren noch erläuterten Seilzugs 70 verfügen die Platten 22, 24, 26 insbesondere über die folgenden Durchbrechungen:

Die beiden Gehäuseplatten 22, 24 weisen eine zentrische Durchbrechung 22a, 24a auf, die dem Hindurchführen eines Achsabschnittes 64 des zweiten Gelenkabschnitts 60 dienen. Zusätzlich verfügt die Gehäuseplatte 22 über eine in etwa einen Winkel von 180° überstreckende bogenförmige Durchbrechung 22b, welche in im Weiteren noch beschriebener Weise der Aufnahme eines Haltefortsatzes 66 des zweiten Gelenkabschnitts dient. Die Zwischenplatte 26 verfügt über eine großflächige Bauraumdurchbrechung 26c, welche abschnittsweise mit der Durchbrechung 22d der Gehäuseplatte 22 übereinstimmt, demgegenüber jedoch noch vergrößert ist. Diese Bauraumdurchbrechung 26c dient der Aufnahme eines Arretiermechanismus 30, der im Weiteren noch erläutert wird.

Wie der Fig. 1 zu entnehmen ist, liegen die beiden Gehäuseplatten 22, 24 und die Zwischenplatte 26 im montierten Zustand bündig aneinander an. Sie sind durch Nieten 28 fest miteinander verbunden. Hierdurch ergibt sich ein außerordentlich stabiler und kompakter Aufbau. Da die Platten jeweils über eine Stärke zwischen 5 und 8 mm verfügen, ist der den ersten Gelenkabschnitt bildende Plattenstapel nur etwa 1,5 cm bis 2 cm groß und daher flexibel einsetzbar. Die durch die Außenkontur der Platten umgebene Fläche beträgt jeweils etwa 100 cm², so dass ein sehr stabiles Abstützen und Befestigen dieses ersten Gelenkabschnitts an einem Möbelstück möglich ist. Die Gelenkabschnitte 20, 60 sind jeweilig mit Befestigungsdurchbrechungen zur Festlegung an jenen Bauteilen vorgesehen, die bestimmungsgemäß gegeneinander verschwenkbar sein sollen.

Die genannten Durchbrechungen in den Gehäuseplatten sind durch Stanzen hergestellt. Dies gestattet eine sehr preisgünstige Fertigung bei ausreichender Genauigkeit.

Wie bereits genannt, bildet die Durchbrechung 26c in der Zwischenplatte 26 den Aufnahmeraum für die Arretiermechanik 30. Diese umfasst zwei Klemmhebel 32 sowie zwei Übertragungshebel 34, welche jeweils als Feinstanzteile hergestellt sind und mittels Nieten 36 an der Gehäuseplatte 22 schwenkbeweglich befestigt sind. Die beiden, bezogen auf die Perspektive der Fig. 2, oberen Enden der Klemmhebel 32 sind miteinander über eine Zugfeder 33 verbunden, die den linken der Klemmhebel 32 im Uhrzeigersinn kraftbeaufschlagt und den rechten der Klemmhebel 32 gegen den Uhrzeigersinn kraftbeaufschlagt. Die Übertragungshebel 34 liegen mit ihren, bezogen auf Fig. 2, oberen Enden an den Klemmhebeln an. Ihr jeweils unteres Ende ist jeweils mit einer Aufnahme 34a für Verbindungselemente 72 eines 2-endigen Bowdenzuges 70 versehen. Die Klemmhebel 32 verfügen jeweils über Klemmflächen 32a, welche im Weiteren noch näher erläutert werden. Diese sind zum Zusammenwirken mit dem Haltefortsatz 66 des zweiten Gelenkabschnitts 60 vorgesehen.

Zur Herstellung des Arretierzustandes sind weiterhin an den Durchbrechungen 22b, 26c jeweils zwei Anschlagsflächen 22d, 26d vorgesehen, welche ebenfalls zum Zusammenwirken mit dem Haltefortsatz 66 vorgesehen sind.

Zur Aufnahme des Achsabschnittes 64 des zweiten Gelenkabschnittes 60 sind neben den bereits beschriebenen Durchbrechungen 22a, 24a an den Gehäuseplatten 22, 24 eine in die genannten Durchbrechungen eingesetzte Gleitlagerhülse 40 vorgesehen, die sich ihrerseits an den Gehäuseplatten 22, 24 abstützt. Des Weiteren sind zur Festlegung eines verjüngten Endabschnittes des Achselements 62 ein Elastomer-Element 42, ein Axialwälzlager 44 und eine Befestigungsmutter 56 sowie einige Zwischenscheiben vorgesehen.

Zum Zwecke des Lösens des arretierten Zustandes des Schwenkgelenks ist der bereits genannte Bowdenzug 70 vorgesehen. Dieser ist im Bereich einer Durchbrechung 24e durch die Gehäuseplatte 24 geführt.

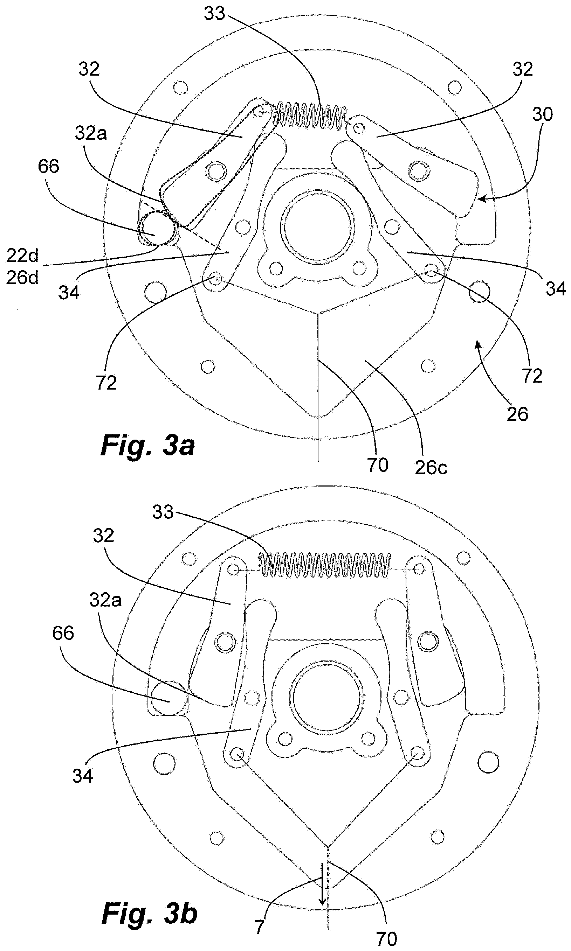

Die Funktion und weitere Aspekte des Schwenkgelenks ergeben sich aus den Darstellungen der Fig. 3a bis 3d. Diese Fig. zeigen die Arbeitsweise des Arretiermechanismus 30 bei abgenommener Gehäuseplatte 24.

Fig. 3a zeigt einen ersten arretierten Zustand. Der Haltefortsatz 66 des zweiten Gelenkabschnitts 60 erstreckt sich durch die Durchbrechungen 22b, 26c und liegt an den durch diese gebildeten Anschlagsflächen 22d, 26d an. Durch den linken Klemmhebel 32 und dessen Klemmfläche 32a wird der Haltefortsatz 66 in seiner Position fixiert.

Die Klemmfläche 32a weist eine besondere Formgebung auf, da sich der Abstand zwischen dieser Klemmfläche 32a und der Klemmhebelschwenkachse 32b in Arretierrichtung 4 verkürzt. Dies führt dazu, dass es auf die präzise Anbringung des Haltefortsatzes 66 am zweiten Gelenkabschnitt 60 nicht ankommt. Dies wird durch die gestrichelte Alternativposition der Komponenten des Haltefortsatzes 66 und des Klemmhebels 32 verdeutlicht. Selbst wenn der Haltefortsatz 66 weiter außen als bestimmungsgemäß angeordnet ist, kann die gegenüber einer Tangentialrichtung zur Klemmhebelschwenkachse 32b angestellte Klemmfläche 32a zuverlässig den Klemmzustand herstellen. Der hiermit einhergehende geringere Bedarf an Präzision bei der Fertigung des Klemmgelenks führt zu reduzierten Herstellungskosten. Die Schrägstellung der Klemmfläche 32a wird durch eine langgestrichelte Tangentiallinie zur Schwenkachse des linken Klemmhebels 32 verdeutlicht.

Eine Schwenkbewegung der Gelenkabschnitte 20, 60 ist im arretierten Zustand der Fig. 3a nicht möglich. Wird versucht, den zweiten Gelenkabschnitt 60 gegenüber dem ersten Gelenkabschnitt 20 im Uhrzeigersinn zu verdrehen, so wird dies durch den Klemmhebel 32 und die aufgrund der nur geringen Neigung der Klemmfläche 32a gegebenen Selbsthemmung verhindert.

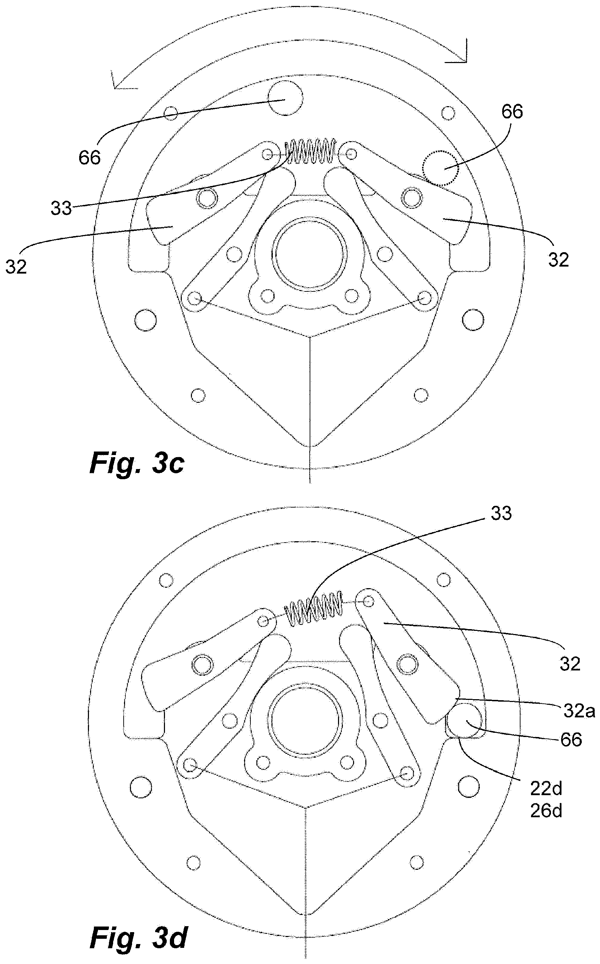

Um das Schwenkgelenk zu lösen, wird der Seilzug 70 in Richtung des Pfeils 7 kraftbeaufschlagt. Hierdurch werden die beiden Übertragungshebel 34 gegeneinander verschwenkt, wobei der linke Übertragungshebel 34 gegen den Uhrzeigersinn verschwenkt wird. Dies führt aufgrund seines Berührkontaktes zum linken Klemmhebel 32 zu einer momentenbeaufschlagung desselben gegen den Uhrzeigersinn, so dass dieser die arretierte Stellung der Fig. 3a verlässt. Im Zustand der Fig. 3b ist nun eine Schwenkbewegung der Gelenkabschnitte 60, 20 gegeneinander möglich. Dies wird durch Fig. 3c verdeutlicht. Wenn eine Schwenkbewegung von etwa 180° durchgeführt wurde, gerät der Haltefortsatz 66 in der in Fig. 3c gepunktet dargestellten Position in Anlage mit dem linken Klemmhebel 32, den er kurzzeitig im Uhrzeigersinn auslenkt, bis er die zweite arretierte Stellung erreicht hat, die in Fig. 3d verdeutlicht ist. Hier verrastet das Gelenk aufgrund der Federkraft der Feder 33 selbsttätig.

Soll ausgehend hiervon der arretierte Zustand wieder gelöst werden, so ist in gleicher Weise wie in Fig. 3b gezeigt der Seilzug 70 zu betätigen, der stets beide Klemmhebel 32 gemeinsam in Richtung ihrer jeweiligen Freigabestellung verschwenkt.

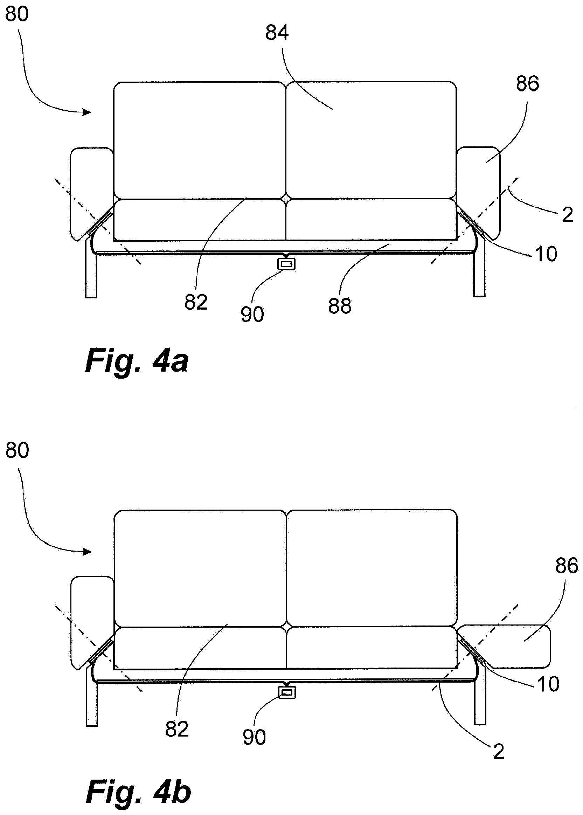

Die Figuren 4a und 4b zeigt eine beispielhafte Anwendung für den Gelenkbeschlag der vorangegangenen Fig. Dargestellt ist in schematischer Weise ein Sitzmöbelstück 80, welches über eine Sitzfläche 82 und eine Rückenlehne 84 verfügt. Zusätzlich sind zwei Armlehnen 86 vorgesehen, die an einer Basis 88 des Sitzmöbelstücks mittels der beschriebenen Schwenkgelenke 10 schwenkbar angelenkt ist. Die Hauptachse 2 der Schwenkgelenke 10 steht zu einer Vertikalen im 45° Winkel.

Dies gestattet es in der der Fig. 4b entnehmbaren Weise, die Armlehnen 86 um 180° zu verschwenken, so dass diese anschließend eine Vergrößerung der Sitzfläche oder Liegefläche bildet.

Durch die Verwendung des Seilzugs zur Betätigung lässt sich eine Handhabe zum Lösen der arretierbaren Schwenkgelenke 10 an flexibler Stelle anordnen, beispielsweise in der in Fig. 4a dargestellten mittigen Position.

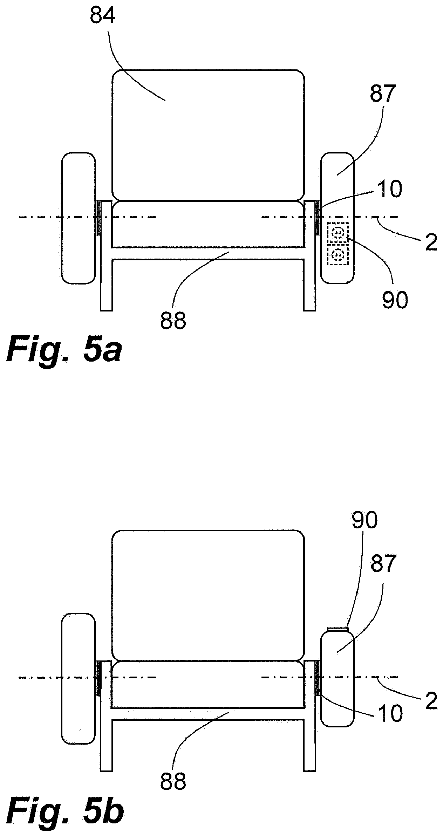

Die Figuren 5a und 5b zeigen ein weiteres Möbelstück. Bei diesem finden auch die beschriebenen Schwenkgelenke 10 Verwendung, wobei deren Hauptachse 2 hier horizontal ausgerichtet ist. Sie gestatten es jeweils, eine Armlehne 87 zu verschwenken.

Beim Ausführungsbeispiel der Fig. 5a und 5b dient dies beispielsweise dazu, Steckdosen 90 oder anderweitige Buchsen für Datenkabel aus einer nach hinten gerichteten Stauposition der Fig. 5a in eine nach oben gerichtete Nutzposition der Fig. 5b zu verschwenken. Auch der Wechsel verschieden gearteter Armlehnenmaterialien oder Oberflächenformen wären so realisierbar.

## Patentansprüche

1. Arretierbares Schwenkgelenk (10), insbesondere für ein Möbelstück (80), mit
- einem ersten Gelenkabschnitt (20), wobei der erste Gelenkabschnitt (20) eine obere und eine untere Gehäuseplatte (22, 24) aufweist,
- einem zweiten Gelenkabschnitt (60),
- einem Drehlager (40, 64), mittels dessen der erste Gelenkabschnitt (20) und der zweite Gelenkabschnitt (60) um eine Hauptachse (2) gegeneinander drehbar sind, und
- einem zwischen einem Freigabezustand und einem Arretierzustand schaltbaren Arretiermechanismus (30) am ersten Gelenkabschnitt (20), mittels dessen der zweite Gelenkabschnitt (60) gegenüber dem ersten Gelenkabschnitt (20) in mindestens einer Relativdrehstellung arretierbar ist, wobei der Arretiermechanismus (30) wenigstens einen schwenkbeweglichen Klemmhebel (32) aufweist, der zwischen den Gehäuseplatten (22, 24) angeordnet ist und durch ein Achselement (36) gelagert ist, das an der oberen und/oder der unteren Gehäuseplatte (22, 24) befestigt ist,
**dadurch gekennzeichnet, dass**
am zweiten Gelenkabschnitt (60) ein Haltefortsatz (66) mit einer Haltefläche zur Beaufschlagung mit einer Klemmkraft vorgesehen ist, wobei der Haltefortsatz (66) sich vorzugsweise durch eine Durchbrechung (22b) in der ersten Gehäuseplatte (22) in den ersten Gelenkabschnitt (20) erstreckt.

2. Schwenkgelenk (10) nach Anspruch 1,
**dadurch gekennzeichnet, dass**
der erste Gelenkabschnitt (20) eine Zwischenplatte (26) aufweist, die bündig an der oberen und der unteren Gehäuseplatte (22, 24) anliegt und die eine Durchbrechung (26c) aufweist, in der der Arretiermechanismus (30) angeordnet ist.

3. Schwenkgelenk (10) nach Anspruch 1 oder 2,
**dadurch gekennzeichnet, dass**
die obere und/oder die untere Gehäuseplatte (22, 24) und/oder die Zwischenplatte (26) als Stanzteile hergestellt sind, wobei insbesondere Außenkonturen und/oder Durchbrechungen (22a, 24a) zur Aufnahme des Achselelements durch Stanzen hergestellt ist.

4. Schwenkgelenk (10) nach einem der vorstehenden Ansprüche,
**dadurch gekennzeichnet, dass**
mindestens eine Anschlagfläche (22d, 26d) am ersten Gelenkabschnitt (20) vorgsehen ist, wobei diese Anschlagfläche (22d, 26d) vorzugsweise durch eine Anschlagfläche (22d, 26d) an einer der Gehäuseplatten (22) und/oder der Zwischenplatte (26) gebildet wird.

5. Schwenkgelenk (10) nach einem der vorstehenden Ansprüche,
**dadurch gekennzeichnet, dass**
das Drehlager (40, 64) einen Achsabschnitt (64) am zweiten Gelenkabschnitt (60) aufweist, wobei der Achsabschnitt (64) vorzugsweise durch Durchbrechungen (22a, 24a) in der oberen und/oder der unteren Gehäuseplatte (22, 24) geführt ist.

6. Schwenkgelenk (10) nach Anspruch 5,
**dadurch gekennzeichnet, dass**
der zweite Gelenkabschnitt (60) eine Grundplatte (62) aufweist, auf der der Achsabschnitt (64) und/oder der Haltefortsatz (66) befestigt sind, wobei die Verbindung vorzugsweise eine Schweißverbindung, eine Stemmverbindung oder eine Pressverbindung ist.

7. Schwenkgelenk (10) nach einem der vorstehenden Ansprüche,
**dadurch gekennzeichnet, dass**
das Schwenkgelenk (10) zur Arretierung in mindestens zwei unterschiedlichen Relativdrehstellungen ausgebildet ist und hierfür zwei Klemmhebel (32) aufweist, die jeweils zwischen einer Arretierstellung und einer Freigabestellung um jeweils einen Klemmhebelachse schwenkbar am ersten Gelenkabschnitt (20) angebracht sind, wobei vorzugsweise
- die Klemmhebel (32) zur Überführung in die jeweilige Arretierungsstellung gegenläufig verschwenkt werden und/oder
- ein gemeinsamer Schaltseilzug (70) vorgesehen ist, mittels dessen beide Klemmhebel (32) gegen die Kraft des Federelements (33) in die Freigabestellung verschwenkbar sind und/oder
- ein gemeinsames Federelement (33) vorgesehen ist, dessen Federenden exzentrisch an beiden Klemmhebeln (32) angebracht sind, so dass die Klemmhebel jeweils in Richtung ihrer Arretierstellung kraftbeaufschlagt werden.

8. Schwenkgelenk (10) nach einem der vorstehenden Ansprüche,
**dadurch gekennzeichnet, dass**
- die untere Gehäuseplatte (24), die obere Gehäuseplatte (22) und/oder die Zwischenplatte (26) eine Stärke von weniger als 10mm aufweisen, vorzugsweise von weniger als 7mm, und/oder
- die untere Gehäuseplatte (24), die obere Gehäuseplatte (22) und/oder die Zwischenplatte (26) einen minimalen Durchmesser von mindestens 60mm aufweisen, vorzugsweise von mindestens 80mm.

9. Möbelstück (80) mit zwei mittels eines Schwenkgelenks (10) gegeneinander verschwenkbaren Möbelstückabschnitten (88, 86),
**dadurch gekennzeichnet, dass**
das Schwenkgelenk (10) nach einem der vorstehenden Ansprüche ausgebildet ist.

10. Möbelstück (80) nach Anspruch 9,
**dadurch gekennzeichnet, dass**
ein erster der Möbelstückabschnitte (88) eine Möbelstückbasis (88) ist und ein zweiter der Möbelstückabschnitte (86) eine gegenüber der Basis (88) verschwenkbare Armlehne (86) ist.

## Claims

1. A lockable pivoting articulation joint (10), in particular for a piece of furniture (80), comprising
a first joint section (20) having an upper and a lower housing plate (22, 24),
a second joint section (60),
a pivot bearing (40, 64) by means of which the first joint section (20) and the second joint section (60) are rotatable relative to each other about a main axis (2), and
a locking mechanism (30) at the first joint section (20), which is switchable between a release condition and a locking condition and by means of which mechanism the second joint section (60) is lockable in relation to the first joint section (20) in at least one relative rotational position, wherein the locking mechanism (30) has at least one pivotable clamping lever (32) arranged between the housing plates (22, 24) and supported by an axle member (36) which is fixed to the upper and/or to the lower housing plate. (22, 24),
**characterized in that**
a retaining projection (66) including a retaining surface for application of a clamping force is provided at the second joint section (60), wherein the retaining projection (66) extends preferably through a breakthrough (22b) in the first housing plate (22) into the first joint section (20).

2. The pivoting articulation joint (10) according to claim 1,
**characterized in that**
the first joint section (20) has an intermediate plate (26) which rests flush at the upper and the lower housing plates (22, 24) and has a breakthrough (26c) in which the locking mechanism (30) is disposed.

3. The pivoting articulation joint (10) according to claim 1 or claim 2,
**characterized in that**
the upper and/or the lower housing plate (22, 24) and/or the intermediate plate (26) are blanked parts, wherein in particular outer contours and/or breakthroughs (22a, 24a) for accommodation of the axle member are produced by blanking.

4. The pivoting articulation joint (10) according to any one of the preceding claims, **characterized in that**
wherein at least one abutment surface (22d, 26d) is provided at the first joint section (20), wherein said abutment surface (22d, 26d) is preferably constituted by an abutment surface (22d, 26d) at one of the housing plates (22) and/or the intermediate plate (26).

5. The pivoting articulation joint (10) according to any one of the preceding claims, **characterized in that**
the pivot bearing (40, 64) has an axle section (64) at the second joint section (60), wherein the axle section (64) is passed preferably through breakthroughs (22a, 24a) in the upper and/or the lower housing plates (22, 24).

6. The pivoting articulation joint (10) according to claim 5,
**characterized in that**
the second joint section (60) has a base plate (62) on which the axle section (64) and/or the retaining projection (66) are fixed, wherein the connection preferably is a welded joint, a caulked joint, or a crimped connection.

7. The pivoting articulation joint (10) according to any one of the preceding claims, **characterized in that**
the pivoting articulation joint (10) is configured for locking in at least two different relative rotational positions and has two clamping levers (32) for that purpose, each of the levers being attached to the first joint section (20) to be pivotable about a respective distinct clamping lever axis between a locking position and a release position, wherein preferably
- the clamping levers (32) for transfer into the respective locking position are pivoted in opposite directions, and/or
- a common shifting cable device (70) is provided by means of which both clamping levers (32) are pivotable into the release position counter the force of the spring element (33), and/or
- a common spring element (33) is provided, where the spring ends thereof are attached eccentrically on both the clamping levers (32), so that force is applied to each of the clamping levers in the direction towards its locking position.

8. The pivoting articulation joint (10) according to according to anyone of the preceding claims,
**characterized in that**
- the lower housing plate (24), the upper housing plate (22) and/or the intermediate plate (26) have a thickness of less than 10 mm, preferably of less than 7 mm, and/or
- the lower housing plate (24), the upper housing plate (22) and/or the intermediate plate (26) have a minimum diameter of at least 60 mm, preferably of at least 80 mm.

9. A piece of furniture (80) with two furniture sections (88, 86) pivotable in relation to each other by means of a pivoting articulation joint (10),
**characterized in that**
the pivoting articulation joint (10) is configured according to any one of the preceding claims.

10. The piece of furniture (80) according to claim 9,
**characterized in that**
a first one of the furniture sections (88) is a furniture base (88) and a second one of the furniture sections (86) is an arm rest (86) pivotable in relation to the base (88).

## Revendications

1. Articulation à pivot (10) pouvant être bloquée, en particulier pour un meuble (80), avec
- une première section d'articulation (20), dans laquelle la première section d'articulation (20) présente des plaques de boîtier supérieure et inférieure (22, 24),
- une deuxième section d'articulation (60),
- un palier rotatif (40, 64), au moyen duquel la première section d'articulation (20) et la deuxième section d'articulation (60) peuvent tourner l'une par rapport à l'autre autour d'un axe principal (2), et
- un mécanisme de blocage (30) pouvant être commuté entre un état de déblocage et un état de blocage au niveau de la première section d'articulation (20), au moyen duquel la deuxième section d'articulation (60) peut être bloquée dans au moins une position de rotation relative par rapport à la première section d'articulation (20), dans laquelle le mécanisme de blocage (30) présente au moins un levier de serrage (32) mobile par pivotement, lequel est disposé entre les plaques de boîtier (22, 24) et qui est monté par un élément d'axe (36), qui est fixé à la plaque de boîtier supérieure et/ou inférieure (22, 24),
**caractérisée en ce que**
un prolongement de maintien (66) est prévu au niveau de la deuxième section d'articulation (60) avec une surface de maintien à soumettre à une force de serrage, dans laquelle le prolongement de maintien (66) s'étend de préférence à travers une découpe (22b) dans la première plaque de boîtier (22) dans la première section d'articulation (20).

2. Articulation à pivot (10) selon la revendication 1,
**caractérisée en ce que**
la première section d'articulation (20) présente une plaque intermédiaire (26), qui repose à fleur au niveau de la plaque de boîtier supérieur et de la plaque de boîtier inférieure (22, 24) et qui présente une découpe (26c), dans laquelle est disposé le mécanisme de blocage (30).

3. Articulation à pivot (10) selon la revendication 1 ou 2,
**caractérisée en ce que**
la plaque de boîtier supérieure et/ou la plaque de boîtier inférieure (22, 24) et/ou la plaque intermédiaire (26) sont fabriquées en tant que pièces estampées, dans laquelle en particulier des contours extérieurs et/ou des découpes (22a, 24a) servant à recevoir l'élément axial par découpage.

4. Articulation à pivot (10) selon l'une quelconque des revendications précédentes,
**caractérisée en ce que**
au moins une surface de butée (22d, 26d) est prévue au niveau de la première section d'articulation (20), dans laquelle ladite surface de butée (22d, 26d) est formée de préférence par une surface de bute (22d, 26d) au niveau d'une des plaques de boîtier (22) et/ou de la plaque intermédiaire (26).

5. Articulation à pivot (10) selon l'une quelconque des revendications précédentes,
**caractérisée en ce que**
le palier rotatif (40, 64) présente une section axiale (64) au niveau de la deuxième section d'articulation (60), dans laquelle la section axiale (64) est guidée de préférence à travers des découpes (22a, 24a) dans la plaque de boîtier supérieure et/ou dans la plaque de boîtier inférieure (22, 24).

6. Articulation à pivot (10) selon la revendication 5,
**caractérisée en ce que**
la deuxième section d'articulation (60) présente une plaque de base (62), sur laquelle la section axiale (64) et/ou le prolongement de maintien (66) sont fixés, dans laquelle la liaison est de préférence une liaison soudée, une liaison busquée ou une liaison pressée.

7. Articulation à pivot (10) selon l'une quelconque des revendications précédentes,
**caractérisée en ce que**
l'articulation à pivot (10) est réalisée afin de se bloquer dans au moins deux positions de rotation relative différentes et présente à cet effet deux leviers de serrage (32), qui sont mis en place de manière à pouvoir pivoter au niveau de la première section d'articulation (20) autour de respectivement un axe de levier de serrage respectivement entre une position de blocage et une position de déblocage, dans laquelle de préférence
- les leviers de serrage (32) sont pivotés en sens contraire aux fins du passage dans la position de blocage respective, et/ou
- un treuil de commutation (70) commun est prévu, au moyen duquel les deux leviers de serrage (32) peuvent être pivotés dans la position de déblocage à l'encontre de la force de l'élément de ressort (33),
- un élément de ressort (33) commun est prévu, dont les extrémités de ressort sont installées de manière excentrique au niveau des deux leviers de serrage (32) de sorte que les leviers de serrage sont soumis à l'action d'une force dans la direction de leur position de déblocage.

8. Articulation à pivot (10) selon l'une quelconque des revendications précédentes,
**caractérisée en ce que**
- la plaque de bâtiment inférieure (24), la plaque de bâtiment supérieur (22) et/ou la plaque intermédiaire (26) présentent une épaisseur inférieure à 10 mm, de préférence inférieure à 7 mm, et/ou
- la plaque de boîtier inférieure (24), la plaque de boîtier supérieure (22) et/ou la plaque intermédiaire (26) présentent un diamètre minimal d'au moins 60 mm, de préférence d'au moins 80 mm.

9. Meuble (80) avec deux sections de meuble (88, 86) pouvant être pivotées les unes contre les autres au moyen d'une articulation à pivot (10),
**caractérisé en ce que**
l'articulation à pivot (10) est réalisée selon l'une quelconque des revendications précédentes.

10. Meuble (80) selon la revendication 9,
**caractérisé en ce que**
une première des sections de meuble (88) est une base de meuble (88), et un deuxième des sections de meuble (86) est un accoudoir (86) pouvant pivoter par rapport à la base (88).
